# EUROPEAN PATENT APPLICATION

(11) **EP 4 708 463 A1**
(43) Date of publication of application: **11.03.2026**
(21) Application number: 24898091.4
(22) Date of filing: 26.11.2024
(51) Int. Cl.: H01M 10/6556, H01M 10/613, H01M 50/289, H01M 50/242, H01M 50/211

(54) **BATTERY PACK**

(30) Priority: 29.11.2023 KR 20230169240
(71) Applicant: LG Energy Solution, Ltd., Seoul 07335 (KR)
(72) Inventor: HWANG, Taewon, Daejeon 34122 (KR); KANG, Jongmo, Daejeon 34122 (KR); SEO, Sung Won, Daejeon 34122 (KR); LEE, Inje, Daejeon 34122 (KR); CHUNG, Seyun, Daejeon 34122 (KR)
(74) Representative: Goddar, Heinz J.
(86) International application number: PCT/KR2024/018904
(87) International publication number: WO 2025/116497

(57) **Abstract**

Provided is a battery pack comprising: a plurality of cell assemblies each of which includes a cell stack comprising a plurality of battery cells stacked together and a cooling member covering at least one surface of the cell stack; and a pack housing in which the plurality of cell assemblies are accommodated, wherein the cooling member includes: a base plate arranged to be opposite to the bottom surface of the cell stack; at least one side plate arranged to be opposite to the cell stack in the stacking direction of the plurality of battery cells and coupled to the pack housing; and a flow path part provided across the base plate and the at least one side plate and configured to allow a coolant to flow therethrough.

## Description

### Technical Field

The present disclosure relates to a battery pack.

### Background Art

A secondary battery can be charged and discharged, making them widely used in mobile devices such as digital cameras, mobile phones, and laptop computers. In particular, they have recently garnered attention as an energy source for electric vehicles and energy storage systems (ESS).

As electrical vehicles and energy storage systems require large amounts of power and high output, large-capacity batteries such as battery modules and battery packs that house multiple secondary batteries (battery cells) are widely used.

In recent years, the technology of Cell To Pack (CTP) structure that maximizes the energy density by bundling multiple battery cells and housing them directly into the pack housing without the need for conventional battery modules has emerged.

However, in the conventional CTP structure, since the battery cells are in direct contact with the battery pack housing and adhesively fixed, when a fault occurs with some of the battery cells, it becomes difficult to separately remove and replace only the affected battery cells.

In addition, since the battery cells are in direct contact with the rigid battery pack housing, it becomes difficult to properly buffer and absorb an expansion pressure generated by the battery cells, which leads to a shortened lifespan of the battery cells.

### Detailed Description of the Invention

### Technical Goals

It is a technical object of the present disclosure, devised to solve at least some of the problems of the prior art, to provide a battery pack with high structural stability while being able to easily separate or replace a battery cell from a pack housing.

It is also a technical object of the present disclosure to provide a battery pack that is capable of properly controlling swelling phenomenon of a battery cell in CTP structure.

It is another technical object of the present disclosure to provide a battery pack with improved cooling effectiveness.

### Technical solutions

Example embodiments of the present disclosure are to provide a battery pack including a plurality of cell assemblies each including a cell stack of which a plurality of battery cells are stacked, and a cooling member covering at least one surface of the cell stack, and a pack housing in which the plurality of cell assemblies are accommodated, wherein the cooling member includes a base plate disposed to face a lower surface of the cell stack, one or more side plates disposed to face the cell stack in a stacking direction of the plurality of battery cells and coupled to the pack housing, and a flow path portion provided across the base plate and the one or more side plates and configured to allow a coolant to flow inside.

The pack housing may include a lower frame on which the plurality of cell assemblies are seated, and one or more cross frames disposed on the lower frame and configured to partition an interior space of the pack housing, and the one or more side plates are coupled to the one or more cross frames.

The one or more side plates may include a first side plate configured to cover one side of the cell stack and including a plurality of first flange portions which are disposed to be spaced apart from each other in a length direction of the cross frame, and a second side plate configured to cover another side of the cell stack which is opposite to the one side and including a plurality of second flange portions disposed to be spaced apart from each other in the length direction of the cross frame.

The plurality of first flange portions and the plurality of second flange portions may be seated and coupled onto an upper portion of the one or more cross frames.

A number of the plurality of first flange portions and a number of the plurality of second flange portions may be different from each other.

The plurality of cell assemblies may include a first cell assembly and a second cell assembly that are adjacent to each other with the cross frame interposed therebetween, and at least one of the plurality of first flange portions of the first cell assembly may be disposed between the plurality of second flange portions of the second cell assembly.

On an upper surface of the cross frame, the plurality of first flange portions of the first cell assembly and the plurality of second flange portions of the second cell assembly may be alternately disposed in the length direction of the cross frame.

The battery pack may further include a fastening member which is fastened to the pack housing by passing through at least one of the plurality of first flange portions and the plurality of second flange portions.

The flow path portion may include a first flow path portion disposed within the base plate and configured to allow a coolant to flow inside and a second flow path portion disposed within the one or more side plates and configured to communicate with the first flow path portion.

The base plate may include a first opening portion connected to the first flow path portion, the one or more side plates may include a second opening portion connected to the second flow path portion, one of the first opening portion and the second opening portion may be connected to a coolant inlet pipe disposed within the pack housing, and another one of the first opening portion and the second opening portion may be connected to a coolant outlet pipe disposed within the pack housing.

The flow path portion of each of the plurality of cell assemblies may be directly connected to the coolant inlet pipe and the coolant outlet pipe.

The first flow path portion may include a branch portion which is a starting point at which one flow path connected to the first opening portion is branched and a first sub-flow path portion and a second sub-flow path portion branched by the branch portion, and one of the first sub-flow path portion and the second sub-flow path portion may be connected to the second flow path portion of the first side plate and another one of the first sub-flow path portion and the second sub-flow path portion may be connected to the second flow path portion of the second side plate.

The one or more side plates may further include one or more hollow portions separated from the second flow path portion, and an air gap may be formed within the one or more hollow portions.

The one or more hollow portions may be provided in plurality within the one or more side plates, and the second flow path portion may be disposed between the plurality of hollow portions.

### Effects of the Invention

According to the example embodiments, it is possible to improve an efficiency of a manufacturing process and maintainability of a battery pack as a battery cell may be easily separated or replaced from a pack housing.

According to the example embodiments of a battery pack, it is also possible to properly absorb a pressure caused by a swelling phenomenon, as a shock-absorbing structure may be disposed between a battery cell and a pack housing.

According to the example embodiments, it is still possible to implement a battery pack with excellent cooling performance and small cooling deviation between a plurality of cell assemblies, as the cell assembly included in the battery pack includes an individual cooling path.

### Brief Description of Drawings

FIG. 1 illustrates an example configuration of a battery pack.
FIG. 2 is an exploded perspective view of a cell assembly includes in a battery pack.
FIG. 3 is a perspective view of a cooling member included in a cell assembly.
FIG. 4 is an example cross-section of a base plate of a cooling member according to section I-I'.
FIG. 5 is an example cross-section of a side plate of a cooling member according to section I-I'.
FIG. 6 is a top view illustrating a state in which a plurality of cell assemblies are disposed within a pack housing.
FIG. 7 is a top view illustrating a state in which a plurality of cell assemblies are disposed within a pack housing according to another example embodiment.
FIG. 8 is a reference view for describing coupling of a plurality of cell assemblies with a pack housing.

### Mode for Carrying Out the Invention

Before example embodiments of the present disclosure is described, terms or words used in the present disclosure and the accompanying claims are not to be limited to general definitions or dictionary definitions, and the terms and words are to be construed under the principle that an inventor may appropriately define a concept of a term in order to describe their invention in the best way. Thus, example embodiments described in the present disclosure and configurations illustrated in the accompanying drawings are merely the most desirable example embodiments and do not represent all of the technical spirit of the present disclosure, and it should be understood that various equivalents and modifications that may replace the example embodiments and configurations may be present at the time of filing the application of the present disclosure.

The same reference numerals or symbols shown in each drawing of this specification indicate parts or components that perform substantially the same function. For ease of explanation and understanding, different example embodiments may be described using the same reference numerals or symbols. That is, even though components having the same reference numerals are shown in the plurality of drawings, the plurality of drawings do not mean one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that these terms are not to exclude in advance a possibility that one or more other features, numbers, operations, actions, elements, components, or combinations thereof may be present or added.

Also, it should be noted in advance that expressions such as an upper side, an upper surface, a lower side, a lower surface, a side surface, a front surface, or a rear surface is based on directions illustrated in the drawings and that these expressions may change when a direction of a corresponding object changes.

In addition, in the present specification and claims, terms including ordinal numbers such as "first" or "second" may be used to distinguish between elements. These ordinal numbers are used to distinguish the same or similar components from each other, and the meaning of the term should not be limitedly interpreted due to the use of these ordinal numbers. As an example, elements combined with such ordinal numbers should not be construed as limiting the use order or arrangement order by the number. If necessary, each ordinal number may be used interchangeably.

Hereinafter, example embodiments will be described with reference to the drawings. However, the spirit of the present disclosure is not limited to the presented example embodiments. As an example, a person skilled in the art who understands the spirit of the present disclosure may suggest other example embodiments that are included within the scope of the spirit of the present disclosure through addition, change, or deletion, however this is also considered to be included within the scope of the spirit of the present disclosure. The shape and size of elements in the drawings may be exaggerated for more clear description.

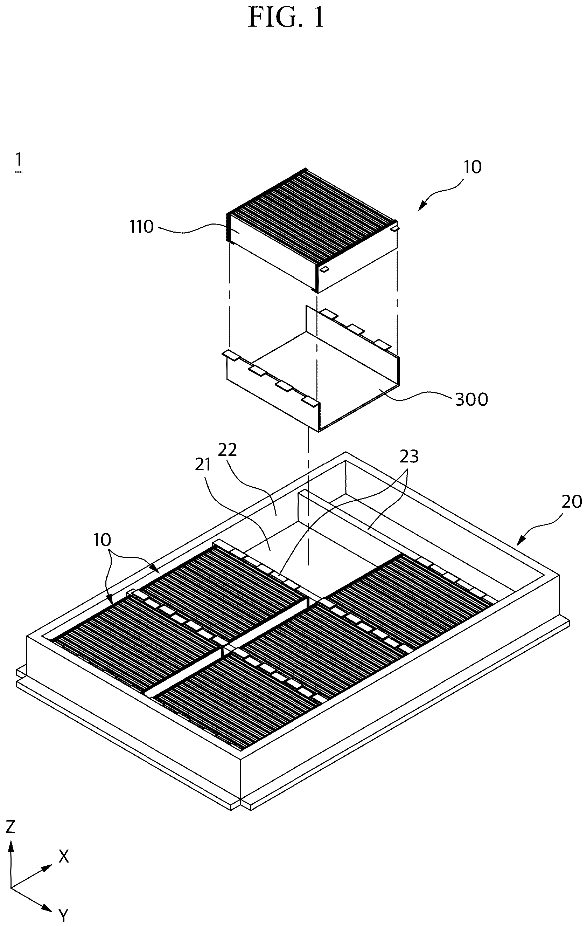

FIG. 1 illustrates an example configuration of a battery pack 1.

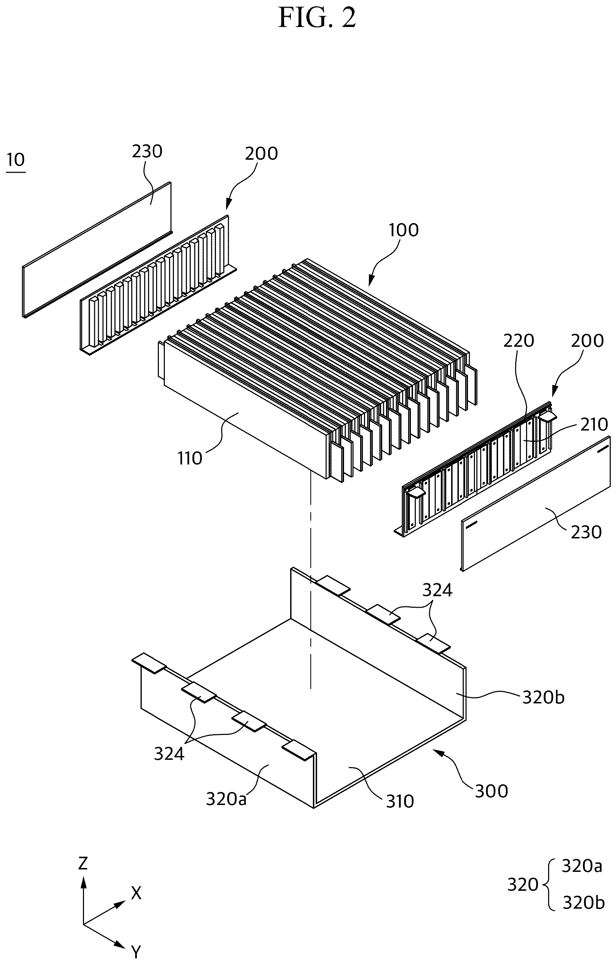

FIG. 2 is an exploded perspective view of a cell assembly 10 included in a battery pack 1.

The battery pack 1 according to example embodiments may include a plurality of cell assemblies 10 each including a plurality of battery cells 110 and a pack housing in which the plurality of cell assemblies 10 are accommodated.

Each of the plurality of cell assemblies 10 includes the plurality of battery cells 110 and is configured to output or store electrical energy.

In the cell assembly 10, the plurality of battery cells 110 may be stacked on top of each other and form at least a portion of a cell stack 100. The cell assembly 10 may further include a bus bar assembly 200 electrically connected to the battery cells 110 of the cell stack 100 and an end cover 230 covering the bus bar assembly 200.

The cell stack 100 may include the plurality of battery cells 110 electrically connected to each other. In one cell stack 100, the plurality of battery cells 110 may be stacked and disposed in one direction (e.g., X-axis direction). In the following descriptions, a stack direction of the battery cell 110 included in the cell stack 100 may be referred to as "first direction" or "cell stacking direction".

The battery cell 110 may be a pouch type secondary battery having a structure of an electrode assembly stored within the pouch. In the pouch type secondary battery, the electrode assembly and an electrolyte solution may be stored within the pouch which is formed by forming one or plurality of exterior materials. However, the battery cell 110 of the cell assembly 10 according to example embodiments is not limited to the pouch type secondary battery. For example, the battery cell 110 may be a prismatic type or a can type secondary battery and may also be formed as a bundle by grouping a plurality of pouch type secondary batteries.

The cell stack 100 may further include a cell protection member (not illustrated) for protecting the battery cell 110 by being disposed between the plurality of battery cells 110.

For example, the cell protection member (not illustrated) may be a surface pressure pad for applying a predetermined surface pressure to the battery cell 110 to prevent the battery cell 110 from swelling during a process of charging and discharging. The surface pressure pad may be made of a material such as polyurethane and silicon, and may pressurize the battery cell 110 using the elasticity of the material.

Alternatively, the cell protection member (not illustrated) may be a heat insulating sheet for preventing high temperature heat energy or flame generated from the battery cell 110 from transferring to adjacent components. The heat insulating sheet may be made of a material with excellent heat resistance and heat insulation such as mica, silicate, and ceramic wool and effectively prevent the heat energy generated from the battery cell 110 from spreading to the surroundings.

As illustrated in FIG. 2, a plurality of cell protection members 120 and the plurality of battery cells 110 may be stacked and disposed along the cell stacking direction (e.g., X-axis direction). However, the quantity of the cell protection member 120 and the battery cell 110 forming the cell stack 100 is not limited to those illustrated in the drawings. The quantity and stacking pattern of the cell protection member 120 and the battery cell 110 may be changed variously.

The cell assembly 10 may further include the bus bar assembly 200 electrically connected to the battery cells 110 of the cell stack 100.

The plurality of battery cells 110 of the cell stack 100 may be electrically connected to each other by the bus bar assembly 200. The bus bar assembly 200 may include a plurality of bus bars 210 electrically connected to the battery cell 110 and a bus bar frame 220 supporting a bus bar 210.

The bus bar 210 may be formed of a conductive material (e.g., copper) and may perform a role of electrically connecting the plurality of battery cells 110 with each other. The bus bar 210 may be electrically connected to the battery cell 110 while being fixed to the bus bar frame 220. On at least some portions of the bus bar 210, a terminal portion that may be electrically connected to an external circuit of the cell assembly 10 may be disposed.

The bus bar frame 220 may support the bus bar 210 to be stably connected to the battery cell 110. The bus bar frame 220 may include a non-conductive material with a predetermined rigidity (e.g., plastic) and structurally support a plurality of bus bars 210.

The bus bar assembly 200 may face at least one side of the cell stack 100. For example, referring to FIG. 2, the bus bar assembly 200 may be provided in pair and disposed in a manner that the bus bar frame 220 faces the cell stack 100 in a length direction (e.g., Y-axis direction) of the battery cell 110. In the following descriptions, the length direction of the battery cell 110 will be referred to as a "second direction", and here, the second direction may be a direction perpendicular to the first direction.

An end cover 230 may be disposed at an outermost edge of one side of the cell assembly 10. The end cover 230 may include a rigid material (e.g., metal or resin compound such as aluminum) and may protect the cell stack 100 from an external shock.

The end cover 230 may be coupled to the bus bar assembly 200 or the cell stack 100 and cover the bus bar 210. Although not illustrated in detail in the drawings, an insulating cover (not illustrated) including an insulating material may be disposed additionally between the end cover 230 and the bus bar assembly 200.

The plurality of cell assemblies 10 may be accommodated in the pack housing 20. The pack housing 20 may include a lower frame 21 on which the cell assembly 10 is mounted, a side frame 22 coupled to the lower frame 21 and forming a lateral side of the pack housing 20, and one or more cross frames 23 disposed on an upper surface of the lower frame 21 and partitioning an interior space of the pack housing 20. Although not illustrated in the drawings, the pack housing 20 may further include an upper frame (not illustrated) that covers an upper portion of the cell assembly 10 and seals the interior space of the pack housing 20.

The lower frame 21 may form a lower surface of the pack housing 20. The lower frame 21 may be provided as a rectangular plate member or polygonal plate member, however, the specific shape is not limited thereto.

The plurality of cell assemblies 10 may be mounted on an upper side of the lower frame 21. For example, the plurality of cell assemblies 10 may be arranged on the lower frame 21 in the first direction or the second direction.

The cross frame 23 may be connected to the lower frame 21. For example, the cross frame 23 may be disposed to cross the upper surface of the lower frame 21 in the first direction or the second direction.

The cross frame 23 may be disposed to partition the interior space of the pack housing 20. For example, from the upper surface of the lower frame 21, a plurality of cross frames 23 may be disposed to be spaced apart in the first direction and one or more cell assemblies 10 may be disposed between two neighboring cross frames 23.

The pack housing 20 may be formed with a highly rigid metal material for protecting the battery cell 110 disposed inside. For example, at least a portion of the lower frame 21 or the cross frame 23 may include aluminum.

In example embodiments, the cell assembly 10 may be directly assembled to the pack housing 20 without a separate module case that surrounds the cell assembly 10. According to such a Cell To Pack (CTP)-type structure, a space occupied by the module case or an assembly tolerance for mounting the module case may be removed, and a higher number of battery cells 110 or a battery cell 110 of greater size may be placed in a released space, thereby increasing energy density of the battery pack 1.

However, in a conventional CTP-type structure, a position of a cell assembly is fixed by applying an adhesive (e.g., thermal resin) between a lower surface of the cell assembly and a pack housing, and in this case, once the cell assembly is fixed onto an upper side of a lower frame, it becomes difficult to remove the cell assembly from the pack housing due to the adhesion of the adhesive. Thus, when a problem occurs in some cell assemblies after a plurality of cell assemblies are assembled into the pack housing, it is difficult to separate or replace the problematic cell assemblies separately.

In order to address the problem, the battery pack 1 according to example embodiments allows the battery cell 110 to be mechanically fastened to the pack housing 20 using other component as a medium instead of being directly bonded into the pack housing, thereby securing the ease of replacement of the cell assembly 10.

More specifically, the cell assembly 10 according to example embodiments may further include a cooling member 300 for cooling the cell stack 100 and be fixedly coupled to the pack housing 20 through the cooling member 300.

The cooling member 300 may be formed of a metal material with excellent heat conductivity such as aluminum and may have a structure that surrounds at least one side of the cell stack 100. For example, referring to FIG. 2, the cooling member 300 may be configured to have a U-shaped structure made of a base plate 310 facing a lower surface of the cell stack 100, two side plates 320 each facing both lateral surfaces of the cell stack 100 to surround the lower surface and both lateral surfaces of the cell stack 100.

The base plate 310 may be disposed to face the cell stack 100 in a height direction (e.g., Z-axis direction) of the cell assembly 10 and cover the lower surface of the cell stack 100. In the following descriptions, the height direction of the cell assembly 10 may be referred to as a third direction, and here, the third direction may be perpendicular to both the first direction and the second direction.

The side plate 320 may be disposed to face the cell stack 100 in the first direction and cover a side surface of the cell stack 100. The side plate 320 may be connected to an edge of the base plate 310.

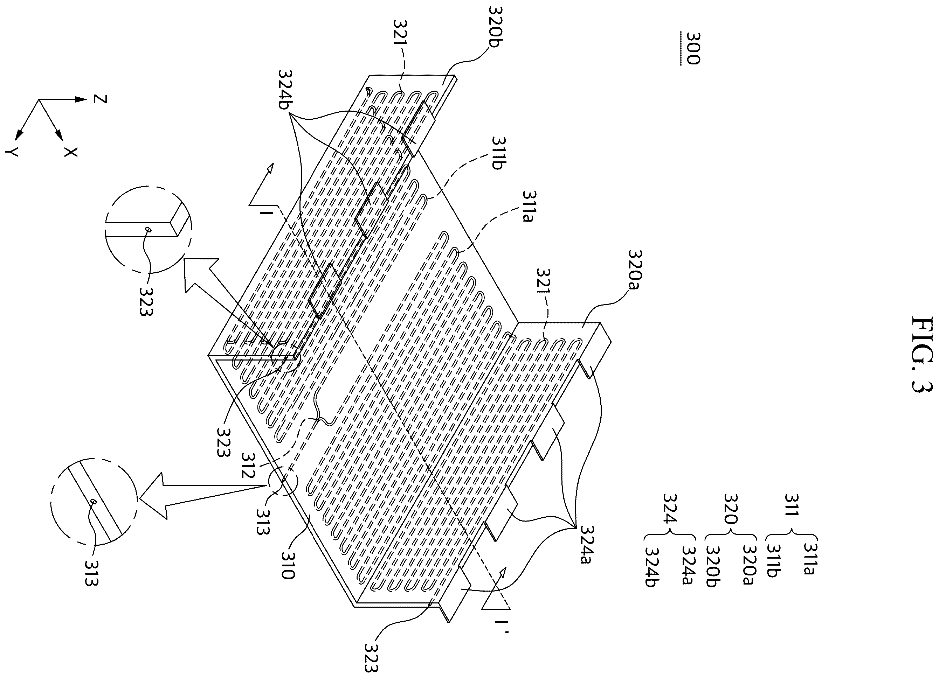

A flow path portion (e.g., 311 and 321 of FIG. 3) in which coolant may flow may be provided within the base plate 310 and the side plate 320 and cool the cell stack 100 quickly and effectively.

An adhesive member (e.g., thermal resin) may be disposed between the cell stack 100 and the base plate 310 or between the cell stack 100 and the side plate 320 and fix the cell stack 100 onto the cooling member 300. However, the coupling scheme between the cell stack 100 and the cooling member 300 is not limited to the above-described bonding scheme. For example, the cell stack 100 may be fixed onto the cooling member 300 through mechanical fastening between the bus bar assembly 200 which is coupled to one side of the cell stack 100 and the cooling member 300.

The cell assembly 10 may be coupled to the cross frame 23 of the pack housing 20 through the side plate 320 of the cooling member 300. For example, the side plate 320 of the cooling member 300 may include a plurality of flange portions 324 that are protruded in an outer direction of the cell assembly 10, and the flange portion 324 may be coupled to an upper portion of the cross frame 23. Accordingly, the cell assembly 10 may be rigidly fixed within the pack housing 20 without a separate adhesive, and the cell assembly 10 may be easily separated from the pack housing 20 by releasing the engagement between the side plate 320 and the cross frame 23 even after the assembly has been completed.

In addition, the cooling member 300 in which coolant flows may be disposed at each of the plurality of cell assemblies 10 and a cooling effectiveness may be improved compared to the conventional battery pack structure in which a cell stack is cooled by a heat sink disposed within or below a lower frame of a pack housing.

Meanwhile, while the cell assembly 10 is coupled to the pack housing 20, the side plate 320 of the cooling member 300 may be disposed between the cell stack 100 and the cross frame 23 and perform a function of absorbing a swelling pressure of the cell stack 100.

Hereinafter, the cooling member 300 included in the cell assembly 10 will be described in detail with reference to FIGS. 3 through 5.

FIG. 3 is a perspective view of the cooling member 300 of the cell assembly 10.

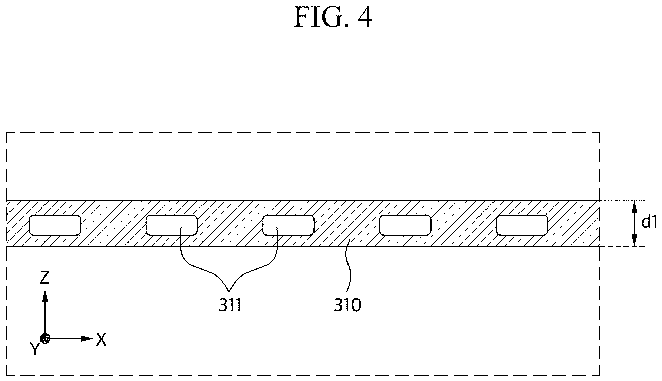

FIG. 4 is an example cross-sectional view of the base plate 310 of the cooling member 300 according to section I-I'.

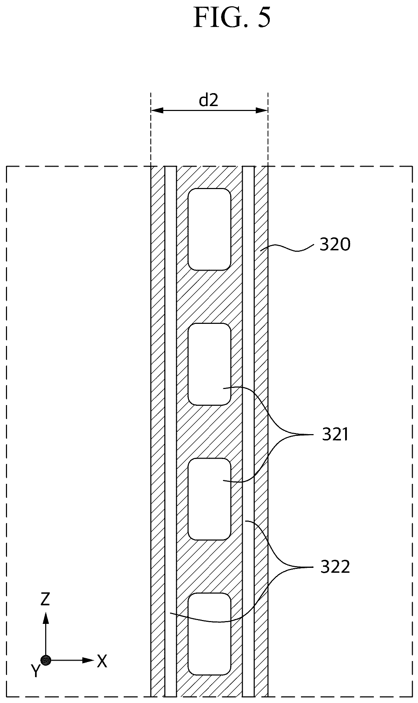

FIG. 5 is an example across-sectional view of the side plate 320 of the cooling member 300 according to section I-I'.

Since the cooling member 300 described in FIGS. 3 through 5 includes all technical features of the cooling member 300 descried with reference to FIGS. 1 and 2, redundant descriptions may be omitted.

The cooling member 300 may include the base plate 310 disposed to face the lower surface of the cell stack 100 (of FIGS. 1 and 2), one or more side plates 320 disposed to face the cell stack 100 in the cell stacking direction, and flow path portions 311 and 321 configured to allow coolant to flow inside.

The flow path portions 311 and 321 may be disposed across the base plate 310 and the side plate 320. For example, referring to FIG. 3, the flow path portions 311 and 321 may include a first flow path portion 311 disposed within the base plate 310 and a second flow path portion 321 disposed within the side plate 320 and communicating with the first flow path portion 311.

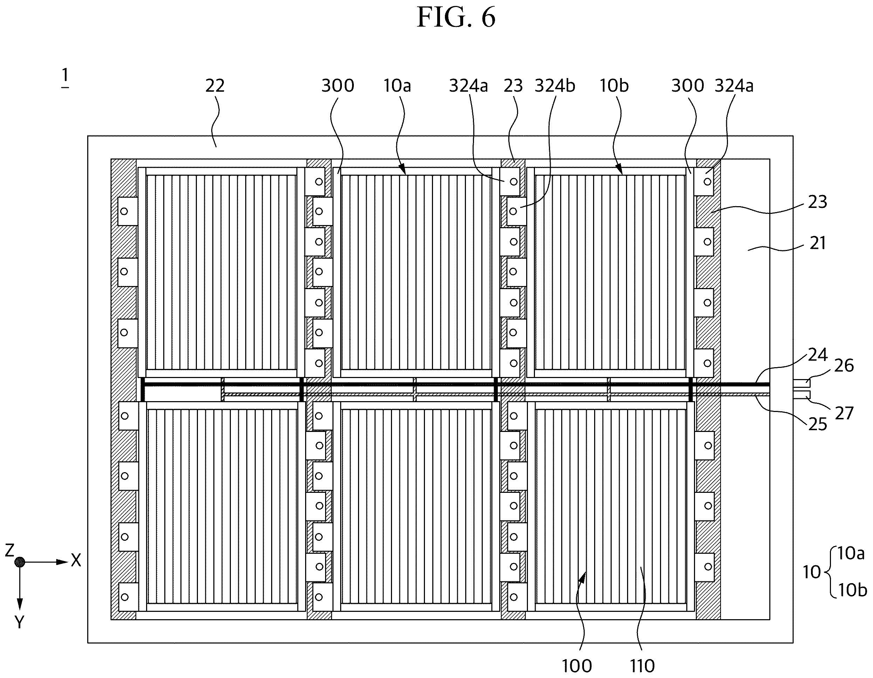

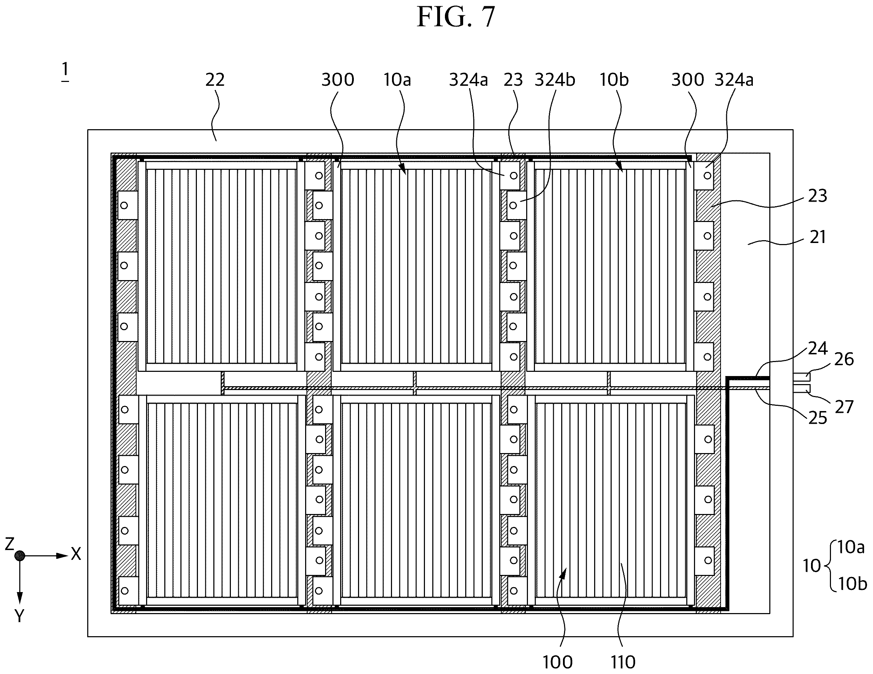

Coolant may flow within the flow path portions 311 and 321 and cool the cell stack 100. Here, the coolant may be a coolant flowing in through a coolant inlet pipe (e.g., 24 of FIGS. 6 and 7) provided in the pack housing 20 (of FIG. 1).

In order to increase an area for the cell stack 100 and coolant to exchange heat with each other as much as possible, the first flow path portion 311 and the second flow path portion 321 may be provided to have a channel that is bent multiple times within the cooling member 300.

The battery pack 1 (of FIG. 1) according to example embodiments may be configured such that the coolant flowing into the cooling member 300 passes through both the first flow path portion 311 and the second flow path portion 321, and exits out of the cooling member 300. For example, the base plate 310 may be provided with a first opening portion 313 connected to the first flow path portion 311 and the side plate 320 may be provided with a second opening portion 323 connected to the second flow path portion 321, and the coolant inlet pipe (e.g., 24 of FIGS. 6 and 7) of the pack housing 20 may be connected to the second opening portion 323 and a coolant outlet pipe (e.g., 25 of FIGS. 6 and 7) of the pack housing 20 may be connected to the first opening portion 313. Accordingly, the coolant flowing into the second flow path portion 321 through the second opening portion 323 may pass through the second flow path portion 321 and the first flow path portion 311 in sequence and exit through the first opening portion 313. That is, in one of the cooling members 300, the first opening portion 313 may be used as a coolant outlet and the second opening portion 323 may be used as a coolant inlet. However, the described flow of the coolant is merely an example, and if necessary, the first opening portion 313 may be used as a coolant inlet and the second opening portion 323 may be used as a coolant outlet in one of the cooling members 300.

In the cooling member 300, the side plate 320 may be provided in pair to cover both sides of the cell stack 100. For example, referring to FIGS. 2 and 3 together, the cooling member 300 may include a first side plate 320a that covers one side of the cell stack 100, and a second side plate 320b that covers another side of the cell stack 100.

Each of the first side plate 320a and the second side plate 320b may be provided with the second flow path portion 321, and the second flow path portions 321 may all be connected to the first flow path portion 311 of the base plate 310. For example, as shown in FIG. 3, the first flow path portion 311 may include a first sub-flow path portion 311a and a second sub-flow path portion 311b of which one flow path connected to the first opening portion 313 is branched at a branch portion 312, and the first sub-flow path portion 311a and the second sub-flow path portion 311b may be connected to the second flow path portion 321 of the first side plate 320a and the second flow path portion 321 of the second side plate 320b respectively.

The cooling member 300 according to example embodiments may cool the cell stack 100 quickly and effectively as the flow path portions 311 and 321 in which coolant flows are disposed within the base plate 310 and the side plate 320 that cover three surfaces of the cell stack 100. Specifically, so called "surface cooling scheme" may be performed, which directly cools a wide surface of the battery cell 110 by flowing the coolant inside the side plates 320 facing the cell stack 100 in the cell stacking direction as well as the base plate 310. According to such a surface cooling scheme, the cooling effectiveness may be maximized compared to the conventional "edge cooling scheme" which cools an edge of the battery cell 110 (of FIG. 2).

Meanwhile, referring to FIGS. 1 through 3 together, as the cell assembly 10 may be coupled within the pack housing 20, the side plate 320 of the cooling member 300 may be disposed between the cross frame 23 of the pack housing 20 and the cell stack 100 and perform a function of absorbing an expansion pressure of the cell stack 100. Here, the expansion pressure of the cell stack 100 is generated due to a swelling phenomenon, which is the battery cell 110 swelling up while being charged and discharged repeatedly, and it is necessary to apply a proper surface pressure that resist to the expansion pressure to prevent the battery cell 110 from having a shortened lifespan and entering an abnormal state.

In example embodiments, the cross frame 23 of the pack housing 20 and the side plate 320 of the cooling member 300 may be disposed to face the cell stack 100 in the cell stacking direction (e.g., X-axis direction) and apply the surface pressure resisting to the expansion pressure of the cell stack 100 to the battery cell 110. Especially, the side plate 320 may be disposed between the cross frame 23 and the cell stack 100 to perform a role as a shock-absorbing structure that prevents the cell stack 100 from being in direct contact with the cross frame 23 with high rigidity, thereby preventing an excessive amount of surface pressure being applied to the battery cell 110.

In order to perform the role as the shock-absorbing structure more effectively, a separate hollow portion 322 which is separated from the second flow path portion 321 may be provided within the side plate 320. An air gap may be formed within the hollow portion 322 and allow the side plate 320 to absorb the expansion pressure of the cell stack 100 more effectively.

As the hollow portion 322 is formed, a thickness of the side plate 320 may be greater than a thickness of the base plate 310 in which the hollow portion 322 is not formed. For example, referring to cross-sectional views of FIGS. 4 and 5, a thickness d1 of the base plate 310 may be smaller than a thickness d2 of the side plate 320 having the hollow portion 322.

However, unlike those illustrated in the drawings, the thicknesses of the base plate 310 and the side plate 320 may be identical. For example, by making a cross-sectional area of the second flow path portion 321 smaller than a cross-sectional area of the first flow path portion 311, the thickness of the side plate 320 may be configured so that is identical to the thickness of the base plate 310 even when the side plate 320 includes both the hollow portion322 and the second flow path portion 321.

In example embodiments, the hollow portion 322 may be provided in plurality within the side plate 320. For example, referring to the cross-sectional view of FIG. 5, more than two hollow portions 322 may be formed within the side plate 320. In this case, a plurality of hollow portions 322 may be disposed to be spaced apart from each other in the cell stacking direction, and the second flow path portion 321 may be disposed between the plurality of hollow portions 322. When such an arrangement structure is applied, the hollow portion 322 disposed between the second flow path portion 321 and the cell stack 100 may absorb the expansion pressure of the cell stack 100 and prevent unintentional deformation of a shape of the second flow path portion 321 of the side plate 320 as the cell stack expands.

However, the number of hollow portions 322 and the arrangement relationship with the second flow path portion 321 illustrated in the drawings are merely an example and may be changed variably if necessary. For example, the hollow portion 322 may not be disposed between the second flow path portion 321 and the cell stack 100 in order not to interfere with the heat exchange between the second flow path portion 321 and the cell stack 100.

In example embodiments, the base plate 310 and the side plate 320 may be provided as a separate plate member and coupled to each other to form an entire cooling member 300. For example, a pair of side plates 320a and 320b which are manufactured separately may be welded to be coupled to both edges of the base plate 310 and form the cooling member 300. In this case, a flow path connecting member that connects the first flow path portion 311 of the base plate 310 and the second flow path portion 321 of the side plates 320a and 320b may be provided additionally.

However, a method of manufacturing the cooling member 300 is not limited to the above description. For example, the cooling member 300 may have an integral structure formed by bending one plate member.

In example embodiments, the side plate 320 may further include a coupling structure to be coupled with the pack housing 20. For example, referring to FIG. 3, the side plate 320 may include one or more flange portions 324 which are protruded in a direction opposite to a direction towards the cell stack 100. The cooling member 300 may be coupled to the pack housing 20 through the flange portion 324, and the cell assembly 10 may be fixed within the pack housing 20 accordingly.

The plurality of flange portions 324 may be provided on each of the first side plate 320a and the second side plate 320b of the cooling member 300. For example, a plurality of first flange portions 324a spaced part from each other in the second direction may be disposed on the first side plate 320a, and a plurality of second flange portions 324b spaced apart from each other in the second direction may be disposed on the second side plate 320b. Here, the second direction may refer to a length direction of the battery cell 110 or a length direction of the cross frame 23.

The plurality of first flange portions 324a and the plurality of second flange portions 324b may be seated and coupled onto the upper portion of the cross frame 23 of the pack housing 20. In this case, to reduce a gap between two adjacent cell assemblies 10, a first flange portion 324a and a second flange portion 324b may be disposed at positions staggered from each other. For example, referring to FIG. 3, the first flange portion 324a of the first side plate 320a and the second flange portion 324b of the second side plate 320b may be disposed at positions staggered from each other in the cell stacking direction (X-axis direction) as not to face each other. When such an arrangement structure is applied, it is possible to configure an arrangement structure of the plurality of cell assemblies 10 in a small space within the pack housing 20. A detailed description of this will be described later with reference to FIGS. 6 through 8.

Meanwhile, with continued reference to FIG. 3, the number of the first flange portions 324a and the number of the second flange portions 324b of the cooling member 300 may be different from each other. For example, as shown in FIG. 3, four first flange portions 324a may be disposed on the first side plate 320a, and three second flange portions 324b may be disposed on the second side plate 320b at positions staggered from the first flange portions 324a. However, the number of the first flange portions 324a and the number of the second flange portions 324b are not limited to those illustrated in the drawings, and it is also not necessary to be provided in different quantities as long as disposed at positions staggered from each other.

A detailed description of an arrangement structure of the plurality of cell assemblies 10 will be described below with reference to FIGS. 6 through 8.

FIG. 6 is a top view illustrating a state in which the plurality of cell assemblies 10 are disposed within the pack housing 20.

FIG. 7 is a top view illustrating a state in which the plurality of cell assemblies 10 are disposed within a pack housing according to another example embodiment.

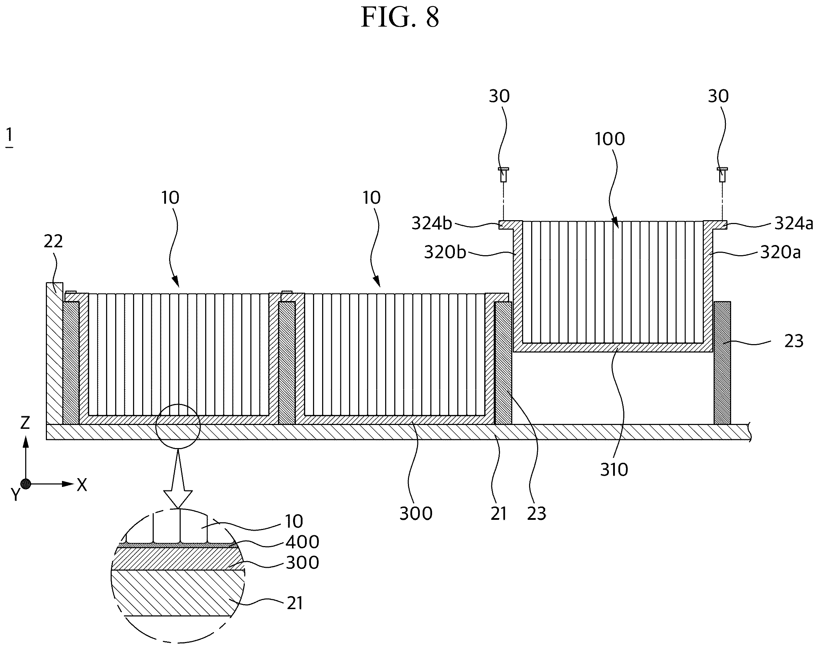

FIG. 8 is a reference view for describing coupling of the plurality of cell assemblies 10 with the pack housing 20.

Since the cell assembly 10 and the pack housing 20 described in FIGS. 6 through 8 include all technical features of the cell assembly 10 and the pack housing 20 described with reference to FIGS. 1 through 5, redundant descriptions may be omitted.

First, referring to FIG. 6, the plurality of cell assemblies 10 may be coupled to the cross frame 23 and fixed within the pack housing 20.

The plurality of cross frames 23 may be disposed to be spaced apart along the upper surface of the lower frame 21, and one or more cell assemblies 10 may be disposed between the cross frames 23. In this case, the cell assembly 10 may be disposed between the cross frames 23 so that the cell stacking direction is parallel to a direction in which the cross frames 23 are spaced apart from each other. According to such arrangement structure, the cross frame 23 may apply a surface pressure, that resist to the expansion pressure generated at the cell stack 100, to the cell assembly 10. However, as described with reference to FIGS. 3 through 5 above, the side plate 320 of the cooling member 300 may absorb shock between the cross frame 23 and the cell stack 100, and an excessive amount of surface pressure being applied to the cell stack 100 by the cross frame 23 with high rigidity may be prevented.

The side plate 320 of the cooling member 300 may include the plurality of flange portions 324 including the first flange portion 324a and the second flange portion 324b and may be coupled to the cross frame 23 through the flange portions 324. For example, referring to FIG. 8, the flange portion 324 may be seated onto the upper portion of the cross frame 23 and the cooling member 300 and the cross frame 23 may be fixed to each other by a separate fastening member 30 such as a bolt passing through the flange portion 324 and fastened to the cross frame 23.

As described with reference to FIGS. 3 through 5 above, the first flange portion 324a and the second flange portion 324b may be disposed at positions staggered from each other. That is, in one cooling member 300, the first flange portion 324a and the second flange portion 324b may be alternately disposed in the cell stacking direction so not to face each other.

Accordingly, when a first cell assembly 10a and a second cell assembly 10b are disposed to be adjacent to each other with one cross frame 23 in between, the second flange portion 324b of the second cell assembly 10b may be disposed between the first flange portions 324a of the first cell assembly 10a. That is, as shown in FIG. 6, on an upper surface of the cross frame 23, the first flange portion 324a of the first cell assembly 10a and the second flange portion 324b of the second cell assembly 10b may be alternately disposed in the second direction (Y-axis direction).

When such a structure is applied, a space consumed by protruding structure of the flange portion 324 may be minimized while forming a stable fastening structure between the cell assembly 10 and the pack housing 20 through the flange portion 324 in the battery pack 1. That is, the first flange portion 324a of the first cell assembly 10a and the second flange portion 324b of the second cell assembly 10b may be configured to be staggered relative to each other and minimize a gap between the first cell assembly 10a and the second cell assembly 10b despite having a protruding structure such as the flange portion 324. Accordingly, as the plurality of cell assemblies 10 may be disposed close to each other in a small space within the pack housing 20, it is possible to prevent reduction of an energy density of the battery pack 1 while having a firm coupling through the flange portion 324.

Also, since the first flange portion 324a of one cell assembly (10a, for example) and the second flange portion 324b of a neighboring cell assembly (10b, for example) are alternately disposed, an effect of improving the ease of assembly of the battery pack 1 may also be achieved as it becomes possible to guide a precise assembly position of the cell assembly 10 within the pack housing 20.

The flow path portions 311 and 321 (of FIGS. 3 through 5) provided in each cell assembly 10 may be connected to coolant pipes 24 and 25 disposed within the pack housing 20. The coolant pipes 24 and 25 may include a coolant inlet pipe 24 connected to an inlet port 26 and a coolant outlet pipe 25 connected to an outlet port 27 provided on one side of the pack housing 20, and the flow path portions 311 and 321 of the cell assembly 10 may each be connected to the coolant inlet pipe 24 and the coolant outlet pipe 25.

For example, referring to FIG. 6, the cooling member 300 of each cell assembly 10 may be connected to the coolant inlet pipe 24 and the coolant outlet pipe 25. In this case, the coolant inlet pipe 24 and the coolant outlet pipe 25 may each connected to one of the first opening portion 313 (of FIG. 3) and the second opening portion 323 (of FIG. 3) of the cooling member 300, and a coolant flowing in from outside of the pack housing 20 may be discharged outside of the pack housing 20 after cooling the cell assembly 10 by circulating along the flow path portions 311 and 321 of the cooling member 300.

In example embodiments, the flow path portions 311 and 321 of the cooling member 300 of each cell assembly 10 may be directly connected to coolant pipes 24 and 25. That is, each cooling member 300 may be supplied with the coolant through the coolant inlet pipe 24 and the coolant that has cooled one cell assembly 10 may be discharged through the coolant outlet pipe 25 without flowing into the cooling member 300 of another cell assembly 10. According to such a coolant supply structure, cooling deviation between the plurality of cell assemblies 10 may be minimized by directly injecting the coolant into the cell assembly 10 through the coolant inlet pipe 24.

Meanwhile, an arrangement structure of the coolant pipes 24 and 25 in the pack housing 20 may be variously implemented, for example, as shown in FIG. 6, the coolant inlet pipe 24 and the coolant outlet pipe 25 may be disposed along a centerline of the pack housing 20 and the first opening portion 313 and the second opening portion 323 of the cooling member 300 may be provided in an identical direction accordingly and connected to the coolant pipes 24 and 25.

Alternatively, as shown in FIG. 7, the coolant inlet pipe 24 may be disposed along an edge of the pack housing 20, the coolant outlet pipe 25 may be disposed along the centerline of the pack housing 20, and an interference between the coolant inlet pipe 24 and the coolant outlet pipe 25 may be reduced as a result. In this case, the first opening portion 313 and the second opening portion 323 of the cooling member 300 may be provided on sides opposite to each other. Meanwhile, in an example embodiment illustrated in FIG. 6 and an example embodiment illustrated in FIG. 7, technical features other than a connecting structure between the coolant pipes 24 and 25 and the cooling member 300 are identical to each other.

In example embodiments, the cell assembly 10 may be easily assembled to or separated from the pack housing 20 through coupling and disengagement between the cooling member 300 and the cross frame 23. For example, as shown in FIG. 8, the cell assembly 10 may be coupled to the pack housing 20 through coupling between the flange portion 324 and the cross frame 23, and an adhesive member 400 may be disposed between the cooling member 300 and the battery cell 110, however, a separate adhesive member may not be disposed between the cooling member 300 and the pack housing 20. Accordingly, the cell assembly 10 may be easily separated from the pack housing 20 compared to the conventional battery pack structure in which a battery cell (or a cell assembly including the battery cell) and a pack housing are coupled through an adhesive member disposed in between as a medium. Especially, according to such a coupling structure, since it is possible to easily separate or replace only some of cell assemblies in which a fault has occurred during a manufacturing process or usage, the efficiency of the manufacturing process and maintainability of the battery pack 1 may be improved.

In addition, a structural rigidity of the battery pack 1 may be improved as the cell assembly 10 may be mounted and fixed within the pack housing 20 by securing a large portion of coupling area with the cross frame 23 through the flange portion 324 protruded from the side plate 320 of the cooling member 300.

Also, an increased lifespan of the battery cell 110 may be expected as the side plate 320 of the cooling member 300 perform a role of a shock-absorbing structure between the cross frame 23 and the cell stack 100 to prevent excessive surface pressure being applied to the cell stack 100 and properly absorbing the expansion pressure generated by a swelling phenomenon.

Also, each cell assembly 10 may have an individual cooling path and implement the battery pack 1 with excellent cooling performance and small cooling deviation between the plurality of cell assemblies 10.

while the present disclosure has been described in detail with reference to example embodiments, however, the scope of the present disclosure is not limited thereto and it is to be understood by those skilled in the art that the present disclosure is intended to cover various modifications and equivalent arrangements within the spirit and scope of the appended claims. In addition, the above-described example embodiments may be implemented with some elements thereof removed, and each example embodiment may be combined and implemented.

### [Description of symbols]

1... Battery pack; 10... Cell assembly;
20... Pack housing; 21... Lower frame;
22... Side frame; 23... Cross frame;
100... Cell stack; 110... Battery cell;
200... Bus bar assembly; 300... Cooling member;
310... Base plate; 311... First flow path portion;
320... Side plate; 321... Second flow path portion;
322... Hollow portion; 324a... First flange portion;
324b... Second flange portion; 400... Adhesive member

## Claims

1. A battery pack comprising:
a plurality of cell assemblies each including a cell stack of which a plurality of battery cells are stacked and a cooling member covering at least one surface of the cell stack; and
a pack housing in which the plurality of cell assemblies are accommodated,
wherein the cooling member comprises:
a base plate disposed to face a lower surface of the cell stack;
one or more side plates disposed to face the cell stack in a stacking direction of the plurality of battery cells and coupled to the pack housing; and
a flow path portion provided across the base plate and the one or more side plates and configured to allow a coolant to flow inside.

2. The battery pack of claim 1, wherein the pack housing comprises:
a lower frame on which the plurality of cell assemblies are seated; and
one or more cross frames disposed on the lower frame and configured to partition an interior space of the pack housing, and
the one or more side plates are coupled to the one or more cross frames.

3. The battery pack of claim 2, wherein the one or more side plates include:
a first side plate configured to cover one side of the cell stack and including a plurality of first flange portions which are disposed to be spaced apart from each other in a length direction of the cross frame; and
a second side plate configured to cover another side of the cell stack which is opposite to the one side and including a plurality of second flange portions disposed to be spaced apart from each other in the length direction of the cross frame.

4. The battery pack of claim 3, wherein the plurality of first flange portions and the plurality of second flange portions are seated and coupled onto an upper portion of the one or more cross frames.

5. The battery pack of claim 3, wherein a number of the plurality of first flange portions and a number of the plurality of second flange portions are different from each other.

6. The battery pack of claim 3, wherein the plurality of cell assemblies include a first cell assembly and a second cell assembly that are adjacent to each other with the cross frame interposed therebetween, and
at least one of the plurality of first flange portions of the first cell assembly is disposed between the plurality of second flange portions of the second cell assembly.

7. The battery pack of claim 6, wherein, on an upper surface of the cross frame, the plurality of first flange portions of the first cell assembly and the plurality of second flange portions of the second cell assembly are alternately disposed in the length direction of the cross frame.

8. The battery pack of claim 3, further comprising a fastening member which is fastened to the pack housing by passing through at least one of the plurality of first flange portions and the plurality of second flange portions.

9. The battery pack of claim 3, wherein the flow path portion includes:
a first flow path portion disposed within the base plate and configured to allow the coolant to flow inside; and
a second flow path portion disposed within the one or more side plates and configured to communicate with the first flow path portion.

10. The battery pack of claim 9, wherein the base plate includes a first opening portion connected to the first flow path portion,
the one or more side plates include a second opening portion connected to the second flow path portion,
one of the first opening portion and the second opening portion is connected to a coolant inlet pipe disposed within the pack housing, and
another one of the first opening portion and the second opening portion is connected to a coolant outlet pipe disposed within the pack housing.

11. The battery pack of claim 10, wherein the flow path portion of each of the plurality of cell assemblies is directly connected to the coolant inlet pipe and the coolant outlet pipe.

12. The battery pack of claim 10, wherein the first flow path portion includes:
a branch portion which is a starting point at which one flow path connected to the first opening portion is branched; and
a first sub-flow path portion and a second sub-flow path portion branched by the branch portion, and
one of the first sub-flow path portion and the second sub-flow path portion is connected to the second flow path portion of the first side plate, and
another one of the first sub-flow path portion and the second sub-flow path portion is connected to the second flow path portion of the second side plate.

13. The battery pack of claim 9, wherein the one or more side plates further include one or more hollow portions separated from the second flow path portion, and
an air gap is formed within the one or more hollow portions.

14. The battery pack of claim 13, wherein the one or more hollow portions are provided in plurality within the one or more side plates, and
the second flow path portion is disposed between the plurality of hollow portions.
